# EUROPÄISCHE PATENTSCHRIFT

(11) **EP 2 627 189 B1**
(45) Veröffentlichungstag und Bekanntmachung des Hinweises auf die Patenterteilung: **27.07.2016**
(21) Anmeldenummer: 11769887.8
(22) Anmeldetag: 14.10.2011
(51) Int. Cl.: A22C 25/18, A22C 17/00, A22C 25/17

(54) **VORRICHTUNG ZUM AUTOMATISCHEN MASCHINELLEN BEARBEITEN VON IN REIHE GEFÖRDERTEN FLEISCHTEILEN SOWIE MITTELS DER VORRICHTUNG DURCHGEFÜHRTES VERFAHREN**
DEVICE FOR AUTOMATICALLY TRIMMING PIECES OF MEAT WHICH ARE CONVEYED IN A ROW AND METHOD THEREFOR.
APPAREIL ET PROCEDE D'EBARBAGE DE MORCEAUX DE VIANDE QUI SONT TRANSPORTÉS DANS UNE RANG

(30) Priorität: 16.10.2010 DE 102010048767
(43) Veröffentlichungstag der Anmeldung: 21.08.2013
(73) Patentinhaber: Nordischer Maschinenbau Rud. Baader GmbH + Co. KG, 23560 Lübeck (DE)
(72) Erfinder: RUSKO, Torsten, 23923 Herrnburg (DE); NIXDORF, Falko, 23554 Lübeck (DE); GRIMM, Oliver, 19061 Schwerin (DE)
(74) Vertreter: Stork Bamberger
(86) Internationale Anmeldenummer: PCT/EP2011/067996
(87) Internationale Veröffentlichungsnummer: WO 2012/049295

(56) Entgegenhaltungen:
- WO-A1-03/037090
- US-A- 4 557 019

## Beschreibung

Die Erfindung betrifft eine Vorrichtung zum automatischen maschinellen Bearbeiten von in Reihe geförderten Fleischteilen, umfassend eine die Fleischteile in Folge und in Förderrichtung fördernde Transporteinrichtung, eine Schneideinrichtung, die einen ein Schneidelement tragenden Schneidkopf aufweist und Fleischteilstücke von den Fleischteilen abtrennende Trennschnitte durchführt, und eine Steuereinrichtung, die die Schneideinrichtung zum Ausführen der Trennschnitte steuert. Sie bezieht sich auch auf ein mit der Vorrichtung durchführbares Verfahren zum Vorbereiten des Enthäutens von in Reihe geförderten, Fleischteile bildenden, zu enthäutenden Fischfilets.

Es sind diverse gattungsgemäße Bearbeitungsvorrichtungen mit Schneideinrichtungen bekannt. Zum Beispiel werden in einer Trimmmaschine zur Filetlängsachse rechtwinklige Besäumschnitte am Schwanzende von Fischfilets mit und ohne Haut ausgeführt. Der Schwanzschnitt erfolgt üblicherweise mit einem gesteuerten Schlagmesser (z. B. WO03/037090 A1). Das rechtwinklig zur Filetlängsachse bzw. zur Förderrichtung ausgerichtete Schlagmesser bedarf eines die Transportfläche unterbrechenden Freiraums, in den es eintaucht. Dies bedingt zwei Transportbänder, zwischen denen die Fischprodukte (Fleischteile bzw. Fischfilets) während des Schneidens zu übergeben sind. Derartige Bandübergaben sind aufwendig. Sie sind mit wenigstens zwei Bandantrieben ausgestattet, die in Verbindung mit zugehörigen Sensoren, die Fischpositionen bzw. Fischwege erfassen, zu steuern sind. Die in Korrelation mit der Fördergeschwindigkeit (Transportgeschwindigkeit) zu betreibenden Schlagmesser erzeugen einen stumpfflächigen Schnitt. Zum Beispiel erfordern stumpfflächige Filetenden von zu enthäutenden Fischfilets zum maschinellen Enthäuten besondere Maßnahmen an der Einzugseinrichtung einer Enthäutemaschine. Gewisse Ausschussquoten sind hinzunehmen, und insbesondere sind auch die Durchsatzgeschwindigkeit und ein störungsfreier Betrieb beeinträchtigt. Auch Schneideinrichtungen, die anstelle eines Schlagmessers mit Wasser- oder Laserstrahlen schneiden, sind hinsichtlich der Ausführung und Steuerung relativ aufwendig und führen zu stumpfen Schnittflächen.

Aus dem US 4 557 019 ist eine Vorrichtung gemäß dem Oberbegriff des Anspruchs 1 bekannt.

Ziele der Erfindung bestehen darin, eine Bearbeitung der Fleischteile (allgemein Fleischprodukte) mit einer automatisch arbeitenden Schneideinrichtung durchzuführen, deren mechanische und steuerungstechnische Konstruktion relativ einfach bleibt, die dennoch mit hoher Durchsatzgeschwindigkeit betrieben werden kann und die quer zur Schnittrichtung gezielt schräge oder quer gekrümmte Schnittflächen erzeugt. Ziel ist es auch, in Reihe geförderte, zu enthäutende Fischfilets zum Enthäuten zu präparieren.

Die Ziele werden in Verbindung mit den Merkmalen der eingangsgenannten Vorrichtung dadurch erreicht, dass die Schneideinrichtung eine Halte- und Führungseinrichtung umfasst, an der der Schneidkopf zum Durchführen der Trennschnitte schräg zur geraden Förderrichtung längs eines geraden Verfahrwegs unter festem Führungs-Schrägwinkel verfahrbar angeordnet ist, dass ein einen Bestandteil der Transporteinrichtung bildendes, die Fleischteile liegend transportierendes Transportband die Halte- und Führungseinrichtung durchgehend passiert, das Schneidelement durch ein rotierend angetriebenes, zum Schneiden in seiner Höhenposition über dem Transportband begrenztes Kreismesser gebildet ist und die Steuereinrichtung beim Durchführen der Trennschnitte eine in Förderrichtung gerichtete Geschwindigkeitskomponente der Verfahrgeschwindigkeit des Schneidkopfes mit der Fördergeschwindigkeit der Fleischteile in Förderrichtung korreliert. Gemäß einem Verfahren zum Vorbereiten des Enthäutens von in Reihe geförderten, Fleischteile bildenden, zu enthäutenden Fischfilets, wird unter Verwendung einer erfindungsgemäßen Vorrichtung erfindungsgemäß von jedem Fischfilet ein Schwanzendstück mittels eines Fasenschnitts abgetrennt, der ein schräg angefastes, als solches gegenüber geschnittener Hautkante zurückspringendes Filetende erzeugt, das als eine Einfädelungshilfe zum Einzug abzutrennender Haut in den Einzugsspalt einer Haut abtrennenden Enthäutemaschine dient.

Man erreicht eine Reihe von Vorteilen. Die erfindungsgemäße Schneideinrichtung umfasst eine einfach bauende und zu steuernde Transporteinrichtung in Form des Transportbandes, das sich ohne Unterbrechung der Förderfläche durchgehend unter dem Messerkopf erstreckt. Infolge der erfindungsgemäßen Anordnung und Führung des Kreismessers resultiert aus der zu schneidenden Fleischdicke, dem Schrägwinkel der Schneidkopf- bzw. Kreismesserführung, der Schnittart mit dem Kreismesser und gegebenenfalls dessen Verfahrgeschwindigkeit eine besondere Schnittfläche, die durch eine Art Fase gebildet ist, nämlich durch eine in gezieltem Maß abgeschrägte, dabei gegebenenfalls auch mehr oder weniger konkavförmige Fläche, die quer zur Durchtrennrichtung spitzwinklige, zurückspringende Fleischabschnitte entstehen lässt. Derartige erfindungsgemäß erzeugte Schnittflächen werden im Folgenden als Fasenflächen bezeichnet. Die Schnittfläche ist quer zum Schnittverlauf schräg und gegebenenfalls kurvenförmig gekehlt. Man erreicht quer zur Schnittrichtung im Unterschied zu einer senkrechten (stumpfen) Schnittfläche eine gegebenenfalls auch nur gering vergrößerte Schnittfläche. Eine solche Schnittfläche bildet insbesondere an einem zu enthäutenden Fleischprodukt, nämlich an dem schwanzseitigen Ende eines zu enthäutenden Fischfilets, das mittels des erfindungsgemäßen Trennschnitts von seinem Schwanzendstück befreit worden ist, eine von der Hautseite bzw. der geschnittenen Hautkante mehr oder weniger ausgeprägt zurückspringende, zumindest im Wesentlichen spitzwinklige Schnittfläche, die als solche insbesondere eine Einfädelungshilfe zum Einzug der abzutrennenden Haut in den Einzugsspalt einer Haut abtrennenden Enthäutemaschine bildet. Die Bewegung des Messerkopfes, insbesondere in Verbindung mit einem diesen tragenden verfahrbaren Schlitten, kann mit üblichen mechanischen Antrieben und elektrischen Steuerungen betrieben werden, die in Verbindung mit Positionen bzw. Wege der zu bearbeitenden Produkte erfassenden Einrichtungen wie z. B. Sensoren arbeiten. Solche Steuerungen können in Anpassung an das zu bearbeitende Produkt übliche programmgesteuerte Steuervorgaben und -abläufe beinhalten. Die beim Durchführen der Trennschnitte in Förderrichtung gerichtete Geschwindigkeitskomponente der Verfahrgeschwindigkeit des Schneidkopfes korreliert mit der Fördergeschwindigkeit der Fleischteile in Förderrichtung derart, dass die beiden Geschwindigkeiten in gesteuerter Wechselwirkung miteinander stehen, wobei die in Förderrichtung gerichtete Geschwindigkeitskomponente der Verfahrgeschwindigkeit zumindest im Wesentlichen gleich der Fördergeschwindigkeit der Fleischteile ist, gegebenenfalls aber auch mit definiertem Maß größer oder kleiner eingestellt werden kann.

Das rotierend angetriebene Kreismesser ist derart eingerichtet, dass es beim Schneiden in seiner Höhenposition über dem Transportband bestimmt bleibt. Allgemein wird jedes Fleischteil über eine Schnittgegenanlage geführt. Diese kann auf einfache Weise fest an dem Schneidkopf angebracht sein, wobei sie beim Schneiden in Nahezuberührung oder in geringster Reibberührung mit dem Transportband zu liegen kommt. Zweckmäßig ist die Schnittgegenanlage mit einem zum Eingriff des Kreismessers ausgebildeten Schnittspalt ausgebildet. In jedem Fall ist die Anordnung derart, dass die Schnittgegenanlage zum Schneiden unter das zu schneidende Fleischteil bewegbar ist. Das damit verbundene Anheben des Fleischteils kann mit einer Hebeeinrichtung unterstützt werden, die vorteilhaft wenigstens einen zum Anheben des Fleischteils ausgerichteten Wasserstrahl erzeugt. Vorteilhaft ist eine solche Hebeeinrichtung an dem Messerkopf angeordnet. Man erreicht dadurch eine besonders große Intensität des Strahls im Hebebereich.

Eine weitere vorteilhafte Gestaltung besteht darin, dass der Schneidkopf einen auf jedes Fleischteil beim Durchführen der Trennschnitte einwirkenden Niederhalter umfasst. Ein solcher Niederhalter wird durch geeignete, übliche Steuerung zum Schneiden abgesenkt und während der Rückbewegung des Kreismessers nach erfolgtem Trennschnitt gehoben.

Eine Ausgestaltung der Erfindung besteht darin, dass die Halte- und Führungseinrichtung, in Förderrichtung betrachtet, ein stromaufwärts liegendes erstes Ende und ein stromabwärts liegendes zweites Ende aufweist und dass die Steuereinrichtung und die Halte- und Führungseinrichtung derart eingerichtet sind, dass der Schneidkopf mit dem Kreismesser die Trennschnitte von dem ersten Ende ausgehend durchführt und beim Erreichen des Trennschnittendes zu dem ersten Ende zurückverfahren wird. Vorteilhaft kann die Einrichtung derart sein, dass das Kreismesser aus während schnittfreien Zustands gehobener Position in wenigstens eine durch Endlage begrenzte Schneidposition absenkbar ist.

Eine besonders bevorzugte und wirkungsvolle Maßnahme der Erfindung kann darin bestehen, dass die Kreismesserebene des Kreismessers unter zur Richtung des geraden Schneidkopf-Verfahrweges besonderem Schnittwinkel ausgerichtet wird. Dadurch lässt sich in besonderem Maß Einfluss auf den Fasenschnitt bzw. die Fasenfläche nehmen. Es ist nämlich gefunden worden, dass mittels der erfindungsgemäßen vorgesehenen Schrägführung unter dem Führungs-Schrägwinkel die Fasenfläche nach Maßgabe der Ausrichtung des Kreismessers zur Richtung des geraden Schneidkopf-Verfahrweges in weitem Bereich veränderbar ist. Eine besonders ausgeprägte, relativ flache Fasenfläche, die also quer zur Schnittrichtung relativ weit zurückspringt, erhält man, wenn der Schnittwinkel zwischen der Kreismesserebene und dem Schneidkopf-Verfahrweg positiv ist, indem die Kreismesserebene zur Förderrichtung unter einem größeren Messer-Schrägwinkel als der Führungs-Schrägwinkel des Kreismessers ausgerichtet ist. Mit einem solchen Schnittwinkel kann die Fasenfläche also relativ groß, das heißt zur Transportfläche relativ flach ausgebildet werden. Wird der genannte Schnittwinkel von einem maximalen positiven Winkelmaß ausgehend verkleinert, verkleinert sich die Fasenfläche; das heißt, dass ihre Ausrichtung zur Transportfläche steiler wird. Für den Fall, dass unter dem Schnittwinkel Null die Kreismesserebene zumindest im Wesentlichen parallel mit dem Schneidkopf-Verfahrweg ausgerichtet ist, entsteht eine Fasenfläche mit einem Mittelmaß zwischen den Fasenflächen der genannten positiven Schnittwinkel und der Fasenflächen von negativen Schnittwinkeln. Der Schnittwinkel ist negativ, indem die Kreismesserebene zur Förderrichtung unter einem kleineren Messer-Schrägwinkel als der Führungs-Schrägwinkel ausgerichtet ist. Je größer absolut der negative Schnittwinkel ist, desto kleiner ist die Fasenfläche, die mit einem maximalen negativen Schnittwinkel zumindest nahezu verschwindet, also in eine zur Transportfläche zumindest im Wesentlichen rechtwinklige und dementsprechend stumpfe Fläche übergehen kann. Jeder feste Schnittwinkel ist unabhängig von der Größe des Führungs-Schrägwinkels.

Eine erfindungsgemäße Bearbeitungsvorrichtung kann vorteilhaft eine Trimmvorrichtung zum Trimmen von die Fleischteile bildenden Fischfilets sein. In einer solchen Vorrichtung werden noch zu enthäutende Fischfilets einer Oberflächentrimmung unterzogen. An der Oberfläche des Fischfilets unerwünschte und/oder wertmindernde Bestandteile wie zum Beispiel weiße Bauchhaut, Flossenansätze oder Fehlerstellen werden mit automatisch arbeitenden Werkzeugen entfernt. Insbesondere in einer solchen Trimmmaschine kann die Schneideinrichtung zum Abtrennen von Schwanzendstücken von die Fleischteile bildenden, zu enthäutenden Fischfilets eingerichtet sein. Eine solche Vorrichtung wird erfindungsgemäß verwendet, um das Verfahren zum Vorbereiten des Enthäutens von zu enthäutenden Fischfilets durchzuführen.

Auf die genannten und noch andere zweckmäßige und vorteilhafte Ausgestaltungen der Erfindung sind Unteransprüche gerichtet. Merkmale der Ausgestaltungen tragen in jeder Kombination zu der erfindungsgemäße Lösung bei, so dass diese nicht auf ein konkret beschriebenes Ausführungsbeispiel eingeschränkt ist. Auch ist jedes Teilmerkmal eines Ausführungsbeispiels als Teilmerkmal weiterer, nicht dargestellter Ausgestaltungen zu verstehen. Lediglich besonders zweckmäßige und vorteilhafte Ausbildungsformen und -möglichkeiten der Erfindung werden anhand der folgenden Beschreibung der in der schematischen Zeichnung dargestellten Ausführungsbeispiele näher beschrieben.

Es zeigen
- Fig. 1 und 2: in Draufsicht und Seitenansicht eine erfindungsgemäße Vorrichtung mit wesentlichen Aggregaten,
- Fig. 3 und 4: in Draufsicht und Seitenansicht eine Messerposition zu Beginn eines Schwanzschnitts an einem Fischfilet,
- Fig. 5, 6A, 6B und 6C: Darstellungen von Winkeln an einer erfindungsgemäßen Vorrichtung,
- Fig. 7: in Draufsicht ein zu bearbeitendes Fischfilet und
- Fig. 8 und 9: in Seitenansicht und Draufsicht eine mit erfindungsgemäßer Vorrichtung erzielbare Fasenschnittfläche.

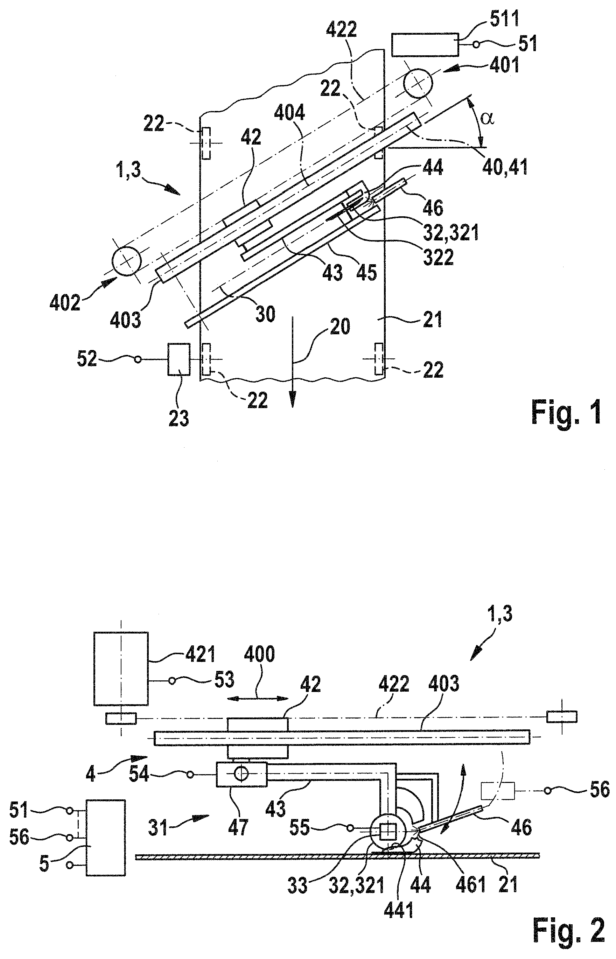

In Fig. 1 und 2 ist eine erfindungsgemäße Bearbeitungsvorrichtung 1 zu sehen, die eine Schneideinrichtung 3 umfasst. Zur Ausstattung der Vorrichtung 1 gehört zudem eine Transporteinrichtung 2 sowie eine Steuereinrichtung 5.

Die Transporteinrichtung 2 umfasst ein horizontal liegendes und geführtes Transportband 21, das in üblicher Weise über in Fig. 1 nur gestrichelt angedeutete Rollen 22 geführt und mit einem nur schematisch dargestellten Bandantrieb 23 versehen ist.

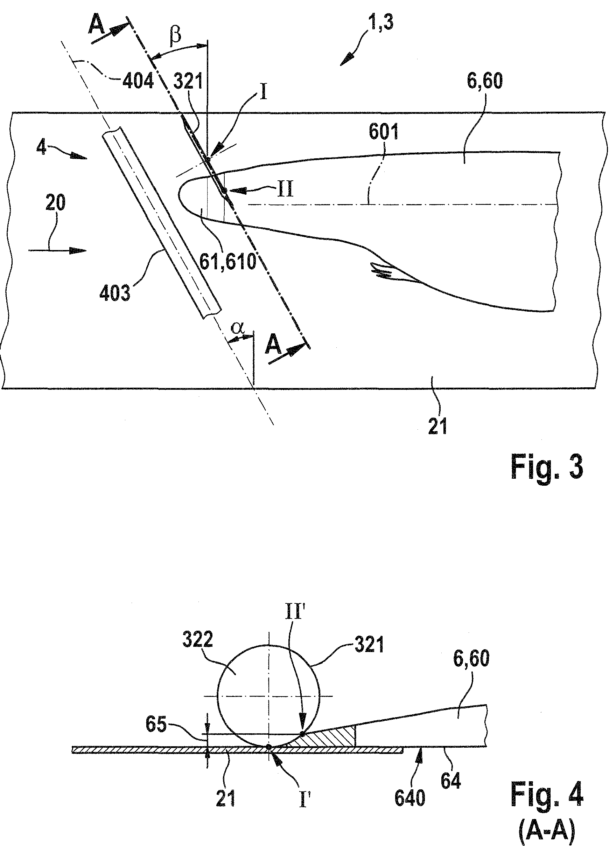

Im Ausführungsbeispiel soll die Bearbeitungsvorrichtung 1 eine lediglich mit der Schneideinrichtung 3 dargestellte und im Übrigen nicht näher dargestellte automatisch arbeitende Trimmvorrichtung zum Oberflächentrimmen von Fleischteile (Fleischprodukte) bildenden Fischfilets sein. Wie aus Fig. 3 und 4 sowie 7 bis 9 hervorgeht, handelt es sich um Fischfilets 60, die, an ihrer Hautseite 640 auf dem Transportband 21 flachliegend, in Förderrichtung 20 mit der Kopfseite voraus gefördert werden. Grundsätzlich ist auch eine Schwanzvoraus-Förderung möglich.

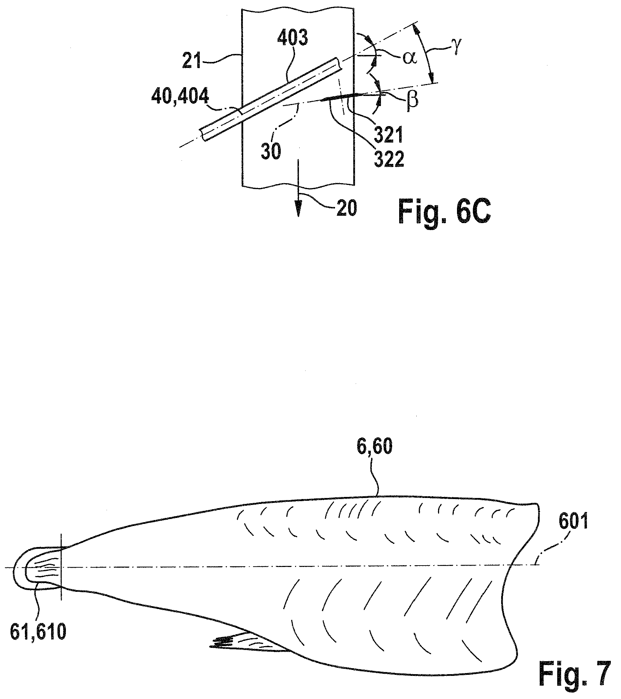

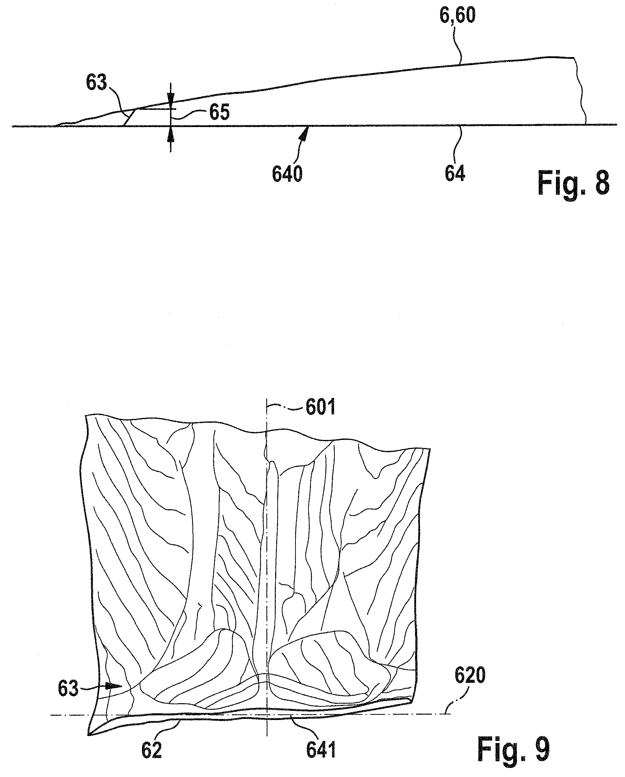

Das Fischfilet 60, zum Beispiel ein Lachs- oder Lachsforellenfilet, weist am Schwanzende je nach Fischgröße einen unerwünschten Bereich von ca. 20 bis 40 mm Länge auf (Fig. 7). Dort befinden sich Sehnen, Fleischverfärbungen und Hautreste, die am fertigen Filetprodukt nicht auftreten dürfen. Das Schwanzendstück 610 ist ein Fleischteilstück 61, das mit einem zumindest im Wesentlichen zur Filetlängsachse 601 rechtwinkligen Besäumschnitt abgetrennt wird. Die erfindungsgemäße Schneideinrichtung 3 führt einen solchen Trennschnitt aus, wie er im Beispiel in Fig. 8 und 9 dargestellt ist und nachstehend näher beschrieben wird.

Fig. 3 und 4 stellen beispielhaft die Position eines Fischfilets 60 unter der Schneideinrichtung 3 zum Beginn des Trennschnitts dar. Dabei passiert das Transportband 21 unter der Schneideinrichtung 3 durchgehend; es ist also durchgehend unter der Schneideinrichtung 3 gespannt und geführt.

Wie insbesondere aus Fig. 1 und 2 ersichtlich, ist wesentlicher Bestandteil der Schneideinrichtung 3 eine Halte- und Führungseinrichtung 4, die einen Halte-/Führungsbalken 403 aufweist, der gestellfest angeordnet ist und sich in Schräglage mit durchgehend gleicher freier Höhe über dem Transportband 21 erstreckt. So weist der Balken 403, in Förderrichtung 20 betrachtet, ein stromaufwärts liegendes erstes Ende 401 und ein stromabwärts liegendes zweites Ende 402 auf. Die Schräglage des Halte-/Führungsbalkens 403 ist durch einen festen Führungs-Schrägwinkel α bestimmt, unter dem sich der Balken 403 quer zur Förderrichtung 20 bzw. zur entsprechenden geraden, mit der Betriebslinie der Vorrichtung 1 korrespondierenden Vorrichtungslängsrichtung erstreckt. Das Gestell der Vorrichtung 1 sowie daran angeordnete, die einzelnen Vorrichtungsaggregate oder -teile haltende und lagernde Arme, Konsolen, Ausleger oder dergleichen sind nicht dargestellt. An dem Balken 403 ist ein Schneidkopf 31 der Schneideinrichtung 3 in Längsrichtung des Balkens 403 in gerader Verfahrrichtung 400 unter dem Schrägwinkel α hin und herbewegbar gelagert und geführt. Diese Lagerung umfasst einen angetriebenen Schlitten 42, der an dem Balken 403 hin und hergeführt wird. Der Schlitten 42 kann zum Beispiel mittels eines umlaufenden Zahnriemens 422, der durch einen Motorantrieb 421 getrieben wird, bewegt werden.

Der Halte-/Führungsbalken 403 ist in der Zeichnung als einfacher, portalähnlicher Balken dargestellt. Selbstverständlich kann der Balken in praktischer Ausführung zum Beispiel durch ein mehrere Querbalken umfassendes Rahmengestell gebildet sein.

Der Schneidkopf 31 der Schneideinrichtung 3 umfasst mehrere zusammenwirkende, das eigentliche Schnittaggregat bildende Teile. Ein Schneidorgan oder Schneidelement 32 ist durch ein rotierend angetriebenes Kreismesser 321 gebildet, das an das freie Ende eines schwenkbar an den Schlitten 42 angelenkten Schwenkarms oder - hebels 43 angelenkt ist, und zwar derart, dass der sich parallel mit dem Balken 403 erstreckende Schwenkhebel 43 je nach Schwenkposition die Höhenposition des Kreismessers 321 über dem Transportband 21 bestimmt. Demzufolge ist das Zentrum des Kreismessers 321, dessen Messerebene 322 in den Ausführungsbeispielen senkrecht zur Fläche des Transportbandes 21 steht, entlang einer zu dem Balken 403 parallelen, im Folgenden Messerlinie 30 genannten Linie verfahrbar.

Die Schwenkanlenkung des Schwenkhebels 43 an den Schlitten 42 umfasst einen durch eine Betätigungseinrichtung 47 gebildeten Schwenkantrieb, der in Abhängigkeit von der Position des Kreismessers 321 längs der Messerlinie 30 wenigstens zwei feste Schwenkpositionen einnimmt, so dass das Kreismesser 321 eine Höhen- oder Vertikalbewegung zwischen zwei Endlagen ausführen kann. Jede andere gesteuerte Höhenverstellung ist möglich. So ist der Schneidkopf 31 bzw. das Kreismesser 321 in eine untere, dem Transportband 21 nahe und somit den Trennschnitt ausführende Position (Fig. 1 und 2) sowie in eine obere nach Ausführen des Trennschnitts eingenommene Rücklauf- und Startposition setzbar.

An dem Schneidkopf 31 ist weiterhin eine Schnittgegenanlage 44 hebelfest angeordnet, die mit ihrer das zu schneidende Produkt 6, 60 gegenhaltenden Anlagefläche unter das Kreismesser 321 ragt. In der Gegenanlagefläche ist ein Schnittspalt 441 ausgbildet, in den das Kreismesser 321 mit seinem Schneidrand eingreift.

An dem freien Ende des Schwenkhebels 43 ist, ebenfalls mit diesem Hebel fest, eine Hebeeinrichtung 46 angeordnet, die im Ausführungsbeispiel mit einer Wasserstrahldüse 461 ausgestattet ist. Mittels des Wasserstrahls, dessen Düse sich in der Nähe des unteren Zenitbereichs des Kreismessers 321 befindet, kann das Auflaufen bzw. Heben des Fischfilets 60 auf die Gegenanlagefläche unterstützt werden.

Die Halte- und Führungseinrichtung 4 ist zudem mit einem Niederhalter 45 ausgestattet, der schematisch nur in Fig. 1 dargestellt ist. Es handelt sich zum Beispiel um einen Bügel, der an seinem dem Kreismesser 321 abgewandten Ende an das Vorrichtungsgestell oder, wie dargestellt, an das stromabwärts liegende Ende des Halte-/Führungsbalkens 403 und mit seinem anderen Ende über eine Rollenführung an das messerseitige Ende des Schwenkhebels 43 angelenkt ist.

Die Steuereinrichtung 5 umfasst übliche Steuerteile und -abschnitte, die den automatischen Betrieb der genannten aktiven Organe steuert, nämlich des Transportbandantriebs 23, des Schlittenantriebs 421, der Betätigungseinrichtung 47 des Messerdrehantriebs 33 und der Hebeeinrichtung 46, letztere gegebenenfalls durch Steuerung des Wasserstrahls. Die Lage bzw. Bewegung jedes Fischfilets 60 auf dem Transportband 21 wird in üblicher Weise zum Beispiel mit einem Bewegungssensor 511 erfasst. Die Steuereinrichtung 5 ist mit den genannten Steuerelementen und Betätigungs- bzw. Antriebseinrichtungen über verbundene Anschlüsse 51 bis 56 oder allgemein durch geeignete Wirkverbindung verbunden.

Anhand des mit Fig. 1 bis 4 dargestellten Ausführungsbeispiels wird der Ablauf eines Trennschnitts an einem die Schneideinrichtung 3 passierenden Fischfilet 60 beschrieben.

In nicht dargestellter Ausgangs- oder Startposition befindet sind der Schneidkopf 31 mit dem Kreismesser 321 und den übrigen Teilen des Schneidkopfs 31 an dem stromaufwärts liegenden Ende 401 der Halte- und Führungseinrichtung 4 in gehobener Position. Bei Annäherung eines Fischfilets 60 an die Schneideinrichtung 3 wird der Schneidkopf 31 zunächst im Randbereich des Transportbandes 21 in die untere Endlage abgesenkt, wie dies in Fig. 1 und 2 dargestellt ist. Erreicht das Filetende zur Ausführung des das Schwanzendstück 610 abtrennenden Trennschnitts die mittels der Steuerung berechnete Wegposition, wird das rotierend angetriebene Kreismesser 321 mittels des gesteuerten Schlittens 42 längs der Messerlinie 30 bewegt, der Trennschnitt also durchgeführt. Beim Beenden des Trennschnitts, und zwar vorteilhaft zeitgleich oder zeitnah mit dem Austritt des Kreismessers 321 aus dem Fischfilet 60, wird der Schneidkopf 31 in die obere Endlage gehoben. Über die Rollenverbindung am freien Ende des Schwenkhebels 43 wird gleichermaßen der Niederhalter 45 gehoben. Im gehobenen Zustand erfolgt die Schlittenbewegung zurück zur Ausgangsposition für den nächsten Schnitt.

Zu Beginn des Trennschnitts fährt die Schnittgegenanlage 44 unter das Fischfilet 60, wobei der Trennschnitt mittels des in den Schnittspalt 441 eingreifenden Kreismessers 321 ausgeführt wird. Der Niederhalter 45 liegt mit seinem Eigengewicht auf dem Fischfilet 60 auf. Er verhindert das seitliche Verschieben des Fischfilets 60 beim Anheben auf die Schnittgegenanlage 44 und beim Schneiden.

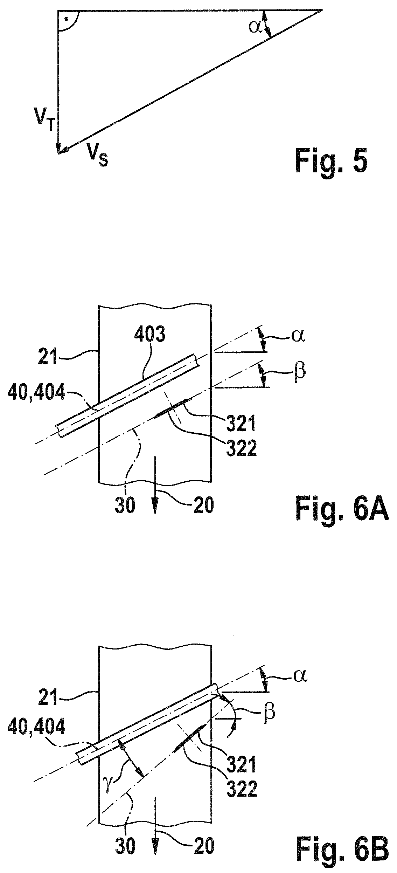

Wie aus Fig. 8 und 9 ersichtlich, erzeugt der Trennschnitt einen zumindest im Wesentlichen zur Förderrichtung 20 bzw. zur Filetlängsachse 601 senkrechten Schnittrand 62. Entsprechend ist eine zur Förderrichtung 20 senkrechte Linie 620 dargestellt. Der Schnitt gelingt dadurch, dass mittels der Steuereinrichtung die in Förderrichtung gerichtete Geschwindigkeitskomponente V_{T} der Verfahrgeschwindigkeit V_{S} des Schneidkopfes 31 mit der Fördergeschwindigkeit des Fischfilets 60 bzw. der Transportgeschwindigkeit des Transportbandes 21 korreliert wird. Stets ist die Korrelation so, dass der Trennschnitt zumindest nahezu senkrecht zur Förderrichtung 20 bzw. zur Filetlängsachse 601 entlang der Schnitt-/Trennlinie 620 ausgeführt wird. Bei Verhältnissen, die bei einer dem Ausführungsbeispiel entsprechenden Vorrichtung 1 eingerichtet sind, ist die Geschwindigkeit des Schlittens 22 unter einem Führungs-Schrägwinkel α = 30° doppelt so groß wie die Geschwindigkeit V_{T}, und zwar entsprechend der anhand von Fig. 5 dargestellten Beziehung V_{T} = V_{S} sin α.

Gemäß der in Fig. 1 und 2 gezeigten Ausführung befindet sich die Messerebene 322 des Kreismessers 321 in Parallelausrichtung mit der oben beschriebenen Messerlinie 30 bzw. mit der Richtung 400 des Verfahrwegs 40. Diese Anordnung ist auch in Fig. 6A dargestellt. Einen besonderen Effekt erzielt man dadurch, dass das Kreismesser 321 mit einem bestimmten Schnittwinkel γ = β - α eingerichtet wird. Dabei wird unter dem Schnittwinkel γ der Winkel zwischen der vorstehend definierten Messerlinie 30 und der Schrägachse 404 der Halte- und Führungseinrichtung 4 (entsprechend der Verfahrwegrichtung 400) verstanden. In Fig. 1 und 6A ist γ = 0; damit erreicht man eine Fasenfläche mittlerer Größe.

Das Entstehen der Fasenfläche wird anhand der Fig. 3 und 4 illustriert. Wird das Kreismesser 321 in der beschriebenen Weise durch das Filet 60 bewegt, ergibt sich durch die Filetdicke 65 (Fig. 4), den Winkel γ und den Kreismesserschnitt eine Fasen- oder Kurvenfläche, die über die Filetdicke 65 in etwa dem Kreismesserradius entspricht. Die Kurvenlinie solcher Flächen verläuft von der Stelle I bzw. I' nach II bzw. II'.

Fig. 6B zeigt das Kreismesser 321 mit einem positiven Schnittwinkel γ. Ein solcher positiver Schnittwinkel γ ist dadurch definiert, dass die Messerlinie 30 zur Förderrichtung 20 unter einem Messerschrägwinkel β ausgerichtet ist, der größer als der Führungs-Schrägwinkel α ist. Es ist gefunden worden, dass man dadurch einen besonderen angefasten Schnitt erzielt, wie dies anhand der Fig. 8 und 9 am geschnittenen, zu enthäutenden Fischfilet 60 beispielhaft dargestellt ist. Man erkennt Fasenfläche 63 bzw. deren Fasenabschnitte, die von dem äußeren Schnittrand 62, der den Hautschnittrand bildet, in Schräglage spitzwinklig zurückspringen. Dadurch entsteht ein Fleischrand, der entlang des Schnittrandes 62 die von dem Fischfilet 60 abzutrennende Haut in besonderem Maße randseitig von Fleisch befreit oder zumindest in der Fleischdicke wesentlich reduziert freilegt. Je größer der positive Schnittwinkel gewählt wird, desto ausgeprägter ist die Fasenfläche.

Ein anderes Ausführungsbeispiel besteht darin, dass, wie in Fig. 6C dargestellt, der Schnittwinkel γ = β - α zwischen der Messerlinie 30 und der Schrägachse 404 bzw. der Richtung 400 des Verfahrwegs 40 negativ ist, indem der Messer-Schrägwinkel β zwischen der Messerlinie 30 und der Förderrichtung 20 kleiner ist als der Führungs-Schrägwinkel α der Halte- und Führungseinrichtung 4. Mit einem derart eingerichteten negativen Messer-Schrägwinkel β kann man zur Transportbandfläche steile Fasenflächen erzielen und wenigstens nahezu verschwinden lassen.

Erfindungsgemäß kann die im Ausführungsbeispiel beschriebene Trimmvorrichtung vorteilhaft genutzt werden, um die von ihren Schwanzendstücken befreiten Fischfilets 60 zum Beschicken einer nicht dargestellten automatischen Enthäutemaschine vorzubereiten. Solche Enthäutemaschinen sind allgemein bekannt. Sie weisen allgemein einen Einzugsspalt auf, in den die abzutrennende Haut einzuziehen ist, um sie von dem Filetfleisch zu lösen. Der Einzug in einen solchen Spalt wird erheblich behindert, wenn die Schnittkantenfläche des Schwanzschnittes stumpf bzw. im Wesentlichen senkrecht zur Filettransportebene (Transportbandfläche) gerichtet ist. Hier schafft die Erfindung auf einfach Weise Abhilfe, indem die Schnittkantenfläche, wie sie ausgeprägt in Fig.8 und 9 dargestellt ist, mit schräger Fasenfläche mittels der erfindungsgemäßen Vorrichtung 1 geschnitten wird, wobei eine Hautkante oder ein Hautrand 641 entsteht, der mittels des Einzugspalts einer vorteilhaft automatisch betriebenen Enthäutemaschine wesentlich einfacher und sicherer als herkömmlich erfasst wird.

## Patentansprüche

1. Vorrichtung (1) zum automatischen maschinellen Bearbeiten von in Reihe geförderten Fleischteilen (6), umfassend eine die Fleischteile (6) in Folge und in Förderrichtung (20) fördernde Transporteinrichtung (2), eine Schneideinrichtung (3), die einen ein Schneidelement (32) tragenden Schneidkopf (31) aufweist und Fleischteilstücke (61) von den Fleischteilen (6) abtrennende Trennschnitte durchführt, und eine Steuereinrichtung (5), die die Schneideinrichtung (3) zum Ausführen der Trennschnitte steuert,
wobei die Schneideinrichtung (3) eine Halte- und Führungseinrichtung (4) umfasst, an der der Schneidkopf (31) zum Durchführen der Trennschnitte schräg zur geraden Förderrichtung (20) längs eines geraden Verfahrwegs (40) unter festem Führungs-Schrägwinkel (α) verfahrbar angeordnet ist, ein einen Bestandteil der Transporteinrichtung (2) bildendes, die Fleischteile (6) liegend transportierendes Transportband (21) die Halte- und Führungseinrichtung (4) durchgehend passiert, das Schneidelement (32) durch ein rotierend angetriebenes, zum Schneiden in seiner Höhenposition über dem Transportband (21) begrenztes Kreismesser (321) gebildet ist, **dadurch gekennzeichnet , dass** die Steuereinrichtung (5) beim Durchführen der Trennschnitte eine in Förderrichtung (20) gerichtete Geschwindigkeitskomponente (V_{T}) der Verfahrgeschwindigkeit des Schneidkopfes (31) mit der Fördergeschwindigkeit der Fleischteile (6) in Förderrichtung (20) korreliert.

2. Vorrichtung nach Anspruch 1, **dadurch gekennzeichnet, dass** der Schneidkopf (31) eine zwischen Kreismesser (321) und Transportband (21) gehaltene Schnittgegenanlage (44) mit einem zum Eingriff des Kreismessers (321) ausgebildeten Schnittspalt (441) umfasst.

3. Vorrichtung nach Anspruch 2, **dadurch gekennzeichnet, dass** die Vorrichtung eine das Fleischteil (6) auf die Schnittgegenanlage (44) hebende Hebeeinrichtung (46) umfasst, die wenigstens einen Wasserstrahl zum Anheben des Fleischteils (6) erzeugt.

4. Vorrichtung nach einem der Ansprüche 1 bis 3, **dadurch gekennzeichnet, dass** der Schneidkopf (31) einen auf jedes Fleischteil (6) beim Durchführen der Trennschnitte einwirkenden Niederhalter (45) umfasst.

5. Vorrichtung nach einem der Ansprüche 1 bis 4, **dadurch gekennzeichnet, dass** die Halte- und Führungseinrichtung (4), in Förderrichtung (20) betrachtet, ein stromaufwärts liegendes erstes Ende (401) und ein stromabwärts liegendes zweites Ende (402) aufweist, und dass die Steuereinrichtung (5) und die Halte- und Führungseinrichtung (4) derart eingerichtet sind, dass der Schneidkopf (31) mit dem Kreismesser (321) die Trennschnitte von dem ersten Ende (401) ausgehend durchführt und beim Erreichen des Trennschnittendes zu dem ersten Ende (401) zurückverfahren wird.

6. Vorrichtung nach einem der Ansprüche 1 bis 5, **dadurch gekenn-zeichnet**, dass das Kreismesser (321) aus während schnittfreien Zustands gehobener Position in eine durch Endlage begrenzte Schneidposition absenkbar angeordnet und eingerichtet ist.

7. Vorrichtung nach einem der Ansprüche 1 bis 6, **dadurch gekenn-zeichnet**, dass ein als Schnittwinkel (γ) bezeichneter Winkel zwischen der Kreismesserebene (322) des Kreismessers (321) und dem Schneidkopf-Verfahrweg (40) Null ist.

8. Vorrichtung nach einem der Ansprüche 1 bis 6, **dadurch gekennzeichnet, dass** ein als Schnittwinkel (γ) bezeichneter Winkel zwischen der Kreismesserebene (322) des Kreismessers (321) und dem Schneidkopf-Verfahrweg (40) negativ ist, indem die Kreismesserebene (322) zur Förderrichtung (20) unter einem kleineren Messer-Schrägwinkel (β) als der Führungs-Schrägwinkel (α) ausgerichtet ist.

9. Vorrichtung nach einem der Ansprüche 1 bis 6, **dadurch gekenn-zeichnet**, dass ein als Schnittwinkel (γ) bezeichneter Winkel zwischen der Kreismesserebene (322) des Kreismessers (321) und dem Schneidkopf-Verfahrweg (40) positiv ist, indem die Kreismesserebene (322) zur Förderrichtung (20) unter einem größeren Messer-Schrägwinkel (β) als der Führungs-Schrägwinkel (α) ausgerichtet ist.

10. Vorrichtung nach einem der Ansprüche 1 bis 9, **dadurch gekennzeichnet, dass** die Vorrichtung eine Trimmvorrichtung zum Trimmen von die Fleischteile (6) bildenden Fischfilets (60) ist.

11. Vorrichtung nach einem der Ansprüche 1 bis 10, **dadurch gekennzeichnet, dass** die Schneideinrichtung (3) zum Abtrennen von Schwanzendstücken (610) von die Fleischteile (6) bildenden, zu enthäutenden Fischfilets (60) eingerichtet ist.

12. Verfahren zum Vorbereiten des Enthäutens von in Reihe geförderten, Fleischteile (6) bildenden, zu enthäutenden Fischfilets (60) unter Verwendung einer Vorrichtung nach Anspruch 11, **dadurch gekennzeichnet, dass** von jedem Fischfilet (60) ein Schwanzendstück (610) mittels eines Fasenschnitts abgetrennt wird, der ein schräg angefastes, als solches gegenüber geschnittenem Hautrand (641) zurückspringendes Filetende erzeugt, das als eine Einfädelungshilfe zum Einzug abzutrennender Haut (64) in den Einzugsspalt einer Haut abtrennenden Enthäutemaschine dient.

## Claims

1. An apparatus for the automated mechanical processing of pieces of meat (6) conveyed in a row, comprising a transporting device (2) that conveys the pieces of meat (6) in succession and in the conveying direction (20), a cutting device (3) that has a cutting head (31) bearing a cutting element (32) and executes separating cuts that cut sections of meat (61) from the pieces of meat (6), and a control device (5) that controls the cutting device (3) for executing the separating cuts, wherein the cutting device (3) comprises a holding and guiding device (4) on which the cutting head (31) is movably arranged to execute the separating cuts at an angle to the straight conveying direction (20) along a straight movement path (40) at a fixed guiding tilt angle (α), a transport belt (21) forming a component of the transporting device (2) and transporting the meat pieces (6) in a lying manner continuously passes by the holding and guiding device (4), the cutting element (32) is formed by a rotationally driven circular blade (321) which, for cutting, is limited at its height position over the transport belt (21), **characterized in that** the control device (5) correlates a velocity component (V_{T}) of the movement velocity of the cutting head (31), which velocity component of the movement is directed in the conveying direction (20) with the conveying velocity of the meat pieces (6) in the conveying direction (20) when executing the separating cuts.

2. Apparatus according to claim 1, **characterized in that** the cutting head (31) comprises a cutting brace (44) held between the circular blade (321) and the transport belt (21) with a cutting gap (441) in which the cutting blade (321) engages.

3. Apparatus according to claim 2, **characterized in that** the apparatus comprises a lifting device (46) which lifts the piece of meat (6) to the cutting brace (44) and generates at least one water jet for lifting the piece of meat (6).

4. Apparatus according to any one of claims 1 to 3, **characterized in that** the cutting head (31) comprises a holding-down device (45) which acts on the piece of meat (6) when separating cuts are being performed.

5. Apparatus according to any one of claims 1 to 4, **characterized in that** the holding and guiding device (4), viewed in the conveying direction (20), has an upstream first end (401) and a downstream second end (402), and the control device (5) and holding and guiding device (4) are arranged such that the cutting head (31) with the circular blade (321) executes separating cuts proceeding from the first end (401) and is moved back to the first end (401) after reaching the end of the separating cut.

6. Apparatus according to any one of claims 1 to 5, **characterized in that** the circular blade (321) is arranged and set up to be lowered from an elevated position in a non-cutting state to a cutting position limited by an end position.

7. Apparatus according to any one of claims 1 to 6, **characterized in that** an angle between the circular blade plane (322) of the circular blade (321) and the movement path of the cutting head (40) and designated as cutting angle (γ) is zero.

8. Apparatus according to any one of claims 1 to 6, **characterized in that** an angle between the circular blade plane (322) of the circular blade (321) and the movement path of the cutting head (40) and designated as cutting angle (γ) is negative **in that** the circular blade plane (322) is aligned relative to the conveying direction (20) at a smaller blade tilt angle (β) than the guiding tilt angle (α).

9. Apparatus according to any one of claims 1 to 6, **characterized in that** an angle between the circular blade plane (322) of the circular blade (321) and the movement path of the cutting head (40) and designated as cutting angle (γ) is positive **in that** the circular blade plane (322) is aligned relative to the conveying direction (20) at a greater blade tilt angle (β) than the guiding tilt angle (α).

10. Apparatus according to any one of claims 1 to 9, **characterized in that** the apparatus is a trimming device for trimming the fish fillets (60) forming the pieces of meat (6).

11. Apparatus according to any one of claims 1 to 10, **characterized in that** the cutting device (3) is set up to cut off tail end sections (610) from the fish fillets (60) to be skinned forming the pieces of meat (6).

12. A method for preparing the skinning of fish fillets (60) conveyed in a row, forming pieces of meat (6) and to be skinned using an apparatus according to claim 11, **characterized in that** a tail end section (610) is removed from each fish fillet (60) by means of a chamfer cut, and this produces a fillet end chamfered at a slant that, as such, is set back relative to the cut edge of skin (641) and serves as an insertion aid for drawing in the skin (64) to be removed into the draw-in gap of a skinning machine that removes skin.

## Revendications

1. Equipement (1) de transformation mécanique automatique de pièces de viande convoyées en série (6), comprenant un dispositif de transport (2) convoyant les pièces de viande (6) l'une après l'autre et dans le sens de convoyage (20), un dispositif de découpe (3) présentant une tête de découpe (31) portant un élément de découpe (32) et pratiquant des entailles dans les pièces de pièce de viande (61) pour les séparer des pièces de viande (6), et un dispositif de commande (5) destiné au dispositif de découpe (3) pour pratiquer les entailles,
où
le dispositif de découpe (3) contient un dispositif de maintien et de guidage (4), au niveau duquel la tête de découpe (31) est agencée de façon mobile pour pratiquer les entailles en oblique par rapport au sens de convoyage rectiligne (20) le long d'un parcours rectiligne (40) selon un angle oblique (α) bien précis, une bande transporteuse (21), assurant le transport à plat des pièces de viande (6) et faisant partie intégrante du dispositif de transport (2) va d'un bout à l'autre du dispositif de maintien et de guidage (4), l'élément de découpe (32) est constitué d'une lame circulaire (321), entraînée en rotation, limitée pour la découpe dans sa position en hauteur par la bande transporteuse (21),
caractérisé en ce
le dispositif de commande (5), va corréler, pour pratiquer les entailles, une composante de vitesse (V_{T}) de déplacement de la tête de découpe (31) étant dirigée dans le sens de transport (20) avec la vitesse de convoyage des pièces de viande (6) dans le sens du transport (20).

2. Equipement selon la revendication 1, **caractérisé en ce que** la tête de découpe (31) comporte une installation de contre-découpe (44) maintenue entre la lame circulaire (321) et la bande transporteuse (21), avec un jeu de découpe (441) conçu pour l'attaque de la lame circulaire (321).

3. Equipement selon la revendication 2, **caractérisé en ce que** l'équipement comporte un dispositif de levage (46) prévu pour soulever la pièce de viande (6) sur l'installation de contre-découpe (44), dispositif de levage produisant au moins un jet d'eau pour soulever la pièce de viande (6).

4. Equipement selon l'une des revendications 1 à 3, **caractérisé en ce que** la tête de découpe (31) contient un organe de retenue vers le bas (45) agissant sur chaque pièce de viande (6) pendant l'exécution des entailles.

5. Equipement selon l'une des revendications 1 à 4, **caractérisé en ce que** le dispositif de maintien et de guidage (4), vu dans le sens du transport (20), présente une première extrémité en amont (401) et une seconde extrémité en aval (402) et **en ce que** le dispositif de commande (5) et le dispositif de maintien et de guidage (4) sont agencés de telle sorte que la tête de découpe (31) pratique avec la lame circulaire (321) les entailles en partant de la première extrémité (401) et, une fois parvenue à l'extrémité de l'entaille, revienne vers la première extrémité (401).

6. Equipement selon l'une des revendications 1 à 5, **caractérisé en ce que** la lame circulaire (321) est disposé et agencée pour s'abaisser, à partir de la position relevée en l'absence d'entailles, vers une position de découpe limitée par des butées.

7. Equipement selon l'une des revendications 1 à 6, **caractérisé en ce qu'**un angle désigné comme angle de découpe (γ) est nul entre le plan de lame circulaire (322) de la lame circulaire (321) et le parcours de la tête de découpe (40).

8. Equipement selon l'une des revendications 1 à 6, **caractérisé en ce qu'**un angle désigné comme angle de découpe (γ) est négatif entre le plan de lame circulaire (322) de la lame circulaire (321) et le parcours de la tête de découpe (40), dans la mesure où le plan de lame circulaire (322) est orienté par rapport au sens de transport (20) avec un angle oblique de lame (β) plus petit que l'angle oblique de guidage (α).

9. Equipement selon l'une des revendications 1 à 6, **caractérisé en ce qu'**un angle désigné comme angle de découpe (γ) est positif entre le plan de lame circulaire (322) de la lame circulaire (321) et le parcours de la tête de découpe (40), dans la mesure où le plan de lame circulaire (322) est orienté par rapport au sens de transport (20) avec un angle oblique de lame (β) plus grand que l'angle oblique de guidage (α).

10. Equipement selon l'une des revendications 1 à 9, **caractérisé en ce que** l'équipement est un dispositif de taillage pour tailler les filets de poisson (60) constituant les pièces de viande (6).

11. Equipement selon l'une des revendications 1 à 10, **caractérisé en ce que** le dispositif de découpe (3) est prévu pour séparer les morceaux d'extrémité de queue (610) des filets de poisson (60) à dépouiller et constituant les pièces de viande (6).

12. Procédé de préparation de dépouillage de filets de poisson (60) à dépouiller, formant des pièces de viande (6) convoyées en série, en utilisant l'équipement selon la revendication 11, **caractérisé en ce qu'**un morceau d'extrémité de queue (610) puisse être séparé de chaque filet de poisson (60) en découpant un chanfrein, produisant une extrémité de filet chanfreinée oblique revenant en tant que telle vers le bord de peau découpé (641) extrémité de filet comme aide à insérer dans la peau à retirer (64) dans la fente d'insertion d'une machine à dépouiller.
